# DEMANDE DE BREVET EUROPEEN

(11) **EP 3 261 033 A1**
(43) Date de publication de la demande: **27.12.2017**
(21) Numéro de dépôt: 17176271.9
(22) Date de dépôt: 15.06.2017
(51) Int. Cl.: G06Q 10/10, H04B 5/00

(54) **IDENTIFICATION D'UTILISATEURS DANS UN ENVIRONNEMENT PRÉDÉFINI**

(30) Priorité: 22.06.2016 FR 1655797
(71) Demandeur: Orange, 75015 Paris (FR)
(72) Inventeur: LEMOINE, Bruno, 14000 Caen (FR); MARIE, Tiphaine, 14280 St Contest (FR)

(57) **Abrégé**

L'invention concerne un procédé d'obtention d'un graphe par un terminal (TA) apte à communiquer avec un équipement (S) via un réseau de télécommunications.

Selon l'invention, le procédé est adapté à obtenir un identifiant de support émis, via une technologie de communication sans fil en champ proche, par un support de données situé dans un environnement prédéfini (ENV), à envoyer à l'équipement une notification signalant la présence de l'utilisateur dans l'environnement, à recevoir des données d'identification d'utilisateurs présents et au moins une information de position, à mettre en évidence sur un graphe affiché au moins une positions attribuée à un utilisateur et à afficher sur ledit graphe, en liaison avec une position mise en évidence, des données de l'utilisateur.

Corrélativement, l'invention concerne un procédé de gestion de présence adapté à recevoir des notifications de présence et à transmettre au terminal des données d'identification d'utilisateurs présents dans l'environnement.

L'invention se rapporte également à un terminal (TA) et à un équipement (S) mettant en oeuvre le procédé d'obtention, respectivement le procédé de gestion.

## Description

L'invention se situe dans le domaine de l'identification de personnes réunies dans un environnement prédéfini.

Connaître les participants effectifs à une réunion est primordial. Dans les réunions physiques, c'est généralement l'objet d'un tour de table, souvent initié par l'organisateur de la réunion.

Cependant, même si il est attentif, un utilisateur peut ne pas retenir un nom ou mal comprendre un nom ou éventuellement ne pas l'entendre.

Il peut également arriver en retard et ne pas être présent au moment du tour de table.

Il est également fréquent que l'organisateur ne propose pas de tour de table.

Identifier les participants à une réunion peut être important pour un participant. Cela peut lui permettre d'adapter son discours ou de prendre contact avec un autre participant après la réunion.

A l'inverse, ne pas se rappeler ou ne pas avoir entendu l'identité d'un participant peut créer une gêne au cours de la réunion.

De plus, ce tour de table peut s'avérer long et fastidieux surtout lorsque le nombre de participants est important.

Un des buts de l'invention est de remédier à des insuffisances/inconvénients de l'état de la technique et/ou d'y apporter des améliorations.

A cette fin, l'invention se rapporte à un procédé d'obtention d'un graphe par un terminal de télécommunication d'un utilisateur, ledit terminal étant apte à communiquer avec un équipement via un réseau de télécommunications.

Selon l'invention, le procédé comporte les étapes suivantes, mises en oeuvre par ledit terminal :
- obtention d'un identifiant de support émis par un support de données apte à émettre des données via une technologie de communication sans fil en champ proche, ledit support étant situé dans un environnement prédéfini ;
- envoi audit équipement d'une notification signalant la présence de l'utilisateur dans l'environnement prédéfini, ladite notification contenant ledit identifiant de support obtenu et un identifiant de l'utilisateur ou du terminal ;
- réception, suite à l'envoi de ladite notification, en provenance dudit équipement, de données relatives à au moins un utilisateur présent dans ledit environnement, lesdites données comprenant des données d'identification d'au moins un utilisateur présent et au moins une information de position ;
- affichage d'un graphe représentant une pluralité de positions d'utilisateurs dans ledit environnement prédéfini ;
- mise en évidence sur le graphe d'au moins une position de la pluralité de positions, ladite au moins une position étant attribuée à au moins un utilisateur de la pluralité en fonction de ladite au moins une information de position ; et
- affichage sur ledit graphe, en liaison avec au moins une position mise en évidence, de tout ou partie des données reçues pour au moins un utilisateur.

Des supports de données agencés pour émettre des données via une technologie sans fil en champ proche, par exemple une technologie radio, sont disposés dans un environnement prédéfini.

Lorsqu'il se trouve à proximité d'un des supports de données, un terminal d'un utilisateur reçoit les données émises par le support. Plus précisément, il recueille ainsi un identifiant de ce support de données.

L'envoi d'une notification par le terminal signale la présence de l'utilisateur dans l'environnement.

La notification comprend un identifiant de support de données et un identifiant de l'utilisateur ou d'un terminal de l'utilisateur.

L'identifiant d'utilisateur ou de terminal d'utilisateur permet à l'équipement recevant cette notification d'obtenir des données d'identification de l'utilisateur.

L'identifiant de support permet à cet équipement d'obtenir une information sur la position occupée par l'utilisateur.

Cette information de position permet de situer cet utilisateur dans l'environnement.

Après avoir signalé sa présence, l'utilisateur reçoit de l'équipement des données lui permettant de mettre en évidence sur un graphe prédéfini, la position des utilisateurs présents et d'associer à ces positions des données d'identification, telles que par exemple un nom.

L'affichage de ce graphe sur un écran de son terminal lui permet d'identifier les différentes personnes présentes dans le même environnement que lui.

Selon un mode de réalisation particulier du procédé d'obtention, ladite au moins une information de position est une information de position relative.

L'information de position relative définit les positions des utilisateurs les unes par rapport aux autres. C'est un moyen simple de localiser les utilisateurs dans un environnement. Ceci évite d'utiliser des techniques et de moyens de localisation tels qu'un GPS (pour 'Global Positioning System').

Selon un mode de réalisation particulier du procédé d'obtention, les données relatives à au moins un utilisateur présent dans ledit environnement comprennent une séquence ordonnée de données d'identification d'utilisateurs.

Dans ce mode de réalisation, l'information de position est donnée par l'ordre de la séquence. L'ordre des données d'utilisateurs dans la séquence correspond à un ordre des utilisateurs dans l'environnement. Il est ainsi aisé de reproduire cet ordre sur un graphe.

Selon un mode de réalisation particulier du procédé d'obtention, la séquence contient des données signalant au moins une position non occupée.

Le signalement des places inoccupées permet de répartir plus précisément les utilisateurs sur le graphe.

Selon un mode de réalisation particulier du procédé d'obtention, ladite au moins une information de position comprend au moins une référence à une position prédéterminée dudit graphe.

Ce mode de réalisation nécessite que l'équipement connaisse les références de positions sur le graphe mais il permet à l'équipement d'informer le terminal d'au moins un emplacement précis d'au moins un utilisateur sur le graphe.

Selon un mode de réalisation particulier du procédé d'obtention, les données relatives à au moins un utilisateur présent dans ledit environnement comprennent une liste de couples, un couple de la liste contenant des données d'identification d'un dit utilisateur présent et un identifiant de position.

Dans ce mode de réalisation, chaque utilisateur présent est associé à une information permettant de définir l'emplacement de cet utilisateur sur le graphe.

Selon un mode de réalisation particulier, le procédé comporte une étape d'envoi audit équipement d'une notification signalant le départ dudit utilisateur de l'environnement. La notification contient un identifiant dudit utilisateur ou dudit terminal.

L'envoi d'une notification signalant le départ d'un utilisateur permet à l'équipement d'être informé que cet utilisateur n'est plus présent dans l'environnement. L'équipement connait ainsi à tout instant la liste des utilisateurs présents dans l'environnement. Il peut alors envoyer des données de présence mises à jour aux autres terminaux restant présents dans l'environnement

Selon un mode de réalisation particulier du procédé d'obtention, les étapes de réception, de mise en évidence et d'affichage sont réitérées.

La réitération de ces étapes permet une mise à jour du graphe. Ceci est particulièrement utile quand un nouvel utilisateur signale sa présence par exemple en cas d'arrivée tardive dans l'environnement, ou signale son départ de l'environnement.

L'invention se rapporte aussi à un procédé de gestion de présence.

Selon l'invention, le procédé de gestion de présence comporte les étapes suivantes, mises en oeuvre par un équipement apte à communiquer avec une pluralité de terminaux via un réseau de télécommunication:
- réception, en provenance d'au moins un terminal de la pluralité, d'au moins une notification signalant la présence d'un utilisateur dans un environnement prédéfini, une dite notification contenant un identifiant de support d'une liste d'identifiants de support prédéfinie pour ledit environnement et un identifiant dudit utilisateur ou d'un terminal dudit utilisateur, ledit identifiant de support étant émis par un support de données apte à émettre des données via une technologie de communication sans fil en champ proche, ladite liste d'identifiants de support contenant au moins une information de position;
- obtention, pour au moins une notification de présence reçue, de données d'identification dudit utilisateur dudit terminal ;
- transmission audit au moins un terminal, de données relatives à au moins un utilisateur présent dans ledit environnement, lesdites données comprenant lesdites données d'identification et au moins une information de position.

Des notifications de signalement de présence émises par plusieurs terminaux se trouvant dans un même environnement sont collectées par un même équipement.

L'ensemble de ces informations permet à cet équipement de fournir aux différents terminaux des données permettant d'afficher sur un graphe représentant l'environnement, la position des différents terminaux et en conséquence des utilisateurs de ces terminaux. Des données d'identification affichées en relation avec une position permettent d'identifier l'utilisateur se trouvant à cette position.

L'invention se rapporte encore à un terminal d'un utilisateur, ledit terminal étant apte à communiquer avec un équipement via un réseau de télécommunications

Selon l'invention, ce terminal comporte :
- un module de communication en champ proche agencé pour obtenir un identifiant de support émis par un support de données apte à émettre des données via une technologie de communication sans fil en champ proche, ledit support étant situé dans un environnement prédéfini ;
- un module d'envoi audit équipement d'une notification signalant la présence dudit utilisateur dans un environnement prédéfini, ladite notification contenant ledit identifiant de support obtenu et un identifiant de l'utilisateur ou du terminal ;
- un module de réception, suite à l'envoi de ladite notification, en provenance dudit équipement, des données relatives à au moins un utilisateur présent dans ledit environnement, lesdites données comprenant des données d'identification d'au moins un utilisateur présent et au moins une information de position ;
- un module d'affichage configuré pour afficher un graphe représentant une pluralité de positions d'utilisateurs dans ledit environnement prédéfini, configuré pour mettre en évidence sur ledit graphe au moins une position de la pluralité de positions, ladite au moins une position étant attribuée à au moins un utilisateur de la pluralité en fonction de ladite au moins une information de position, et configuré pour afficher sur ledit graphe, en liaison avec au moins une position mise en évidence, tout ou partie des données reçues pour au moins un utilisateur.

L'invention se rapporte aussi à un équipement apte à communiquer avec une pluralité de terminaux via un réseau de communication comprenant :
- un module de réception configuré pour recevoir, en provenance d'au moins un terminal de la pluralité, au moins une notification signalant la présence d'un utilisateur dans un environnement prédéfini, une dite notification contenant un identifiant de support d'une liste d'identifiants de support prédéfinie pour ledit environnement et un identifiant dudit utilisateur ou d'un terminal dudit utilisateur, ledit identifiant de support étant émis par un support de données apte à émettre des données via une technologie de communication sans fil en champ proche, ladite liste d'identifiants de support contenant au moins une information de position prédéfinie ;
- un module d'obtention, pour au moins une notification de présence reçue, de données d'identification dudit utilisateur dudit terminal ;
- un module de transmission audit au moins un terminal, des données relatives à au moins un utilisateur présent dans ledit environnement, lesdites données comprenant lesdites données d'identification et au moins une information de position.

L'invention se rapporte aussi à un système comprenant un équipement tel que décrit précédemment et une pluralité de terminaux tels que décrit précédemment.

Les terminaux et l'équipement ainsi que le système bénéficient des mêmes avantages cités précédemment que le procédé d'obtention et le procédé de gestion de présence.

L'invention se rapporte également à un produit programme d'ordinateur comprenant des instructions pour la mise en oeuvre d'un procédé d'obtention tel que décrit précédemment, lorsque ce programme est exécuté par un processeur.

L'invention se rapporte aussi à un produit programme d'ordinateur comprenant des instructions pour la mise en oeuvre d'un procédé de gestion de présence tel que décrit précédemment, lorsque ce programme est exécuté par un processeur.

L'invention se rapporte encore à un support d'informations lisible par un processeur de données, et comportant des instructions pour la mise en oeuvre d'un procédé d'obtention tel que décrit précédemment.

L'invention se rapporte enfin à un support d'informations lisible par un processeur de données, et comportant des instructions pour la mise en oeuvre d'un procédé de gestion tel que décrit précédemment.

L'invention concerne ainsi un logiciel ou programme, susceptible d'être exécuté par un ordinateur ou par un processeur de données, ce logiciel / programme comportant des instructions pour commander l'exécution des étapes d'un procédé d'obtention ou d'un procédé de gestion. Ces instructions sont destinées à être stockées dans une mémoire d'un dispositif informatique, chargées puis exécutées par un processeur de ce dispositif informatique.

Ce logiciel / programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le dispositif informatique peut être mis en oeuvre par une ou plusieurs machines physiquement distinctes et présente globalement l'architecture d'un ordinateur, incluant des constituants d'une telle architecture: mémoire(s) de données, processeur(s), bus de communication, interface(s) matérielle(s) pour la connexion de ce dispositif informatique à un réseau ou un autre équipement, interface(s) utilisateur, etc.

L'invention concerne aussi un support d'informations lisible par un processeur de données, et comportant des instructions d'un programme tel que mentionné ci-dessus. Le support d'informations peut être n'importe quelle entité ou dispositif capable de stocker le programme.

D'autres particularités et avantages de la présente invention apparaîtront dans la description suivante d'un mode de réalisation donné à titre d'exemple non limitatif, en référence aux dessins annexés, dans lesquels :
- la figure 1 est un schéma illustrant un système selon un mode de réalisation de l'invention,
- la figure 2 est un organigramme illustrant les différentes étapes d'un procédé d'obtention d'un graphe et d'un procédé de gestion de présence selon un mode de réalisation de l'invention,
- la figure 3 est un schéma représentant un premier graphe selon un mode de réalisation de l'invention,
- la figure 4 est un schéma représentant le premier graphe dans lequel des positions sont mises en évidence, selon un premier exemple de réalisation,
- la figure 5 est un schéma représentant le premier graphe dans lequel des positions sont mises en évidence, selon un deuxième exemple de réalisation,
- la figure 6 est un schéma représentant un deuxième graphe selon un mode de réalisation de l'invention,
- la figure 7 est un schéma représentant un équipement apte à mettre en oeuvre un procédé de gestion selon un mode de réalisation de l'invention,
- la figure 8 est un schéma représentant un terminal apte à mettre en oeuvre un procédé d'obtention selon un mode de réalisation de l'invention.

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit ci-dessous pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou avec processeur intégré pour l'exécution de logiciel, par exemple un circuit intégré, une carte à puce, une carte électronique pour l'exécution d'un micrologiciel (firmware), etc.

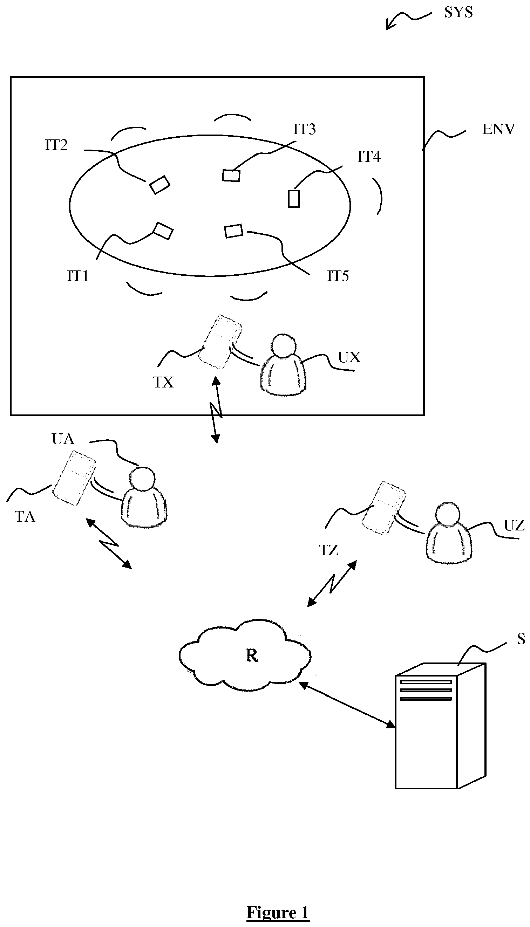

Un mode de réalisation d'un procédé d'obtention d'un graphe et d'un procédé de gestion de présence va maintenant être décrit en référence aux figures 1 à 5.

En référence à la **figure 1**, une pluralité de supports de données, ici des supports de données IT1, IT2, IT3, IT4 et IT5 sont répartis dans un environnement prédéfini ENV.

Les supports de données sont par exemple des étiquettes RFID ('Radio Frequency Identification').

Plus généralement, un tel support de données est un dispositif apte à émettre des données via une technologie de communication sans fil en champ proche.

Aucune limitation n'est attachée au nombre de supports de données.

L'environnement ENV est par exemple une salle de réunion dans laquelle des sièges sont installés autour d'une table et les étiquettes sont disposées sur la table, face à un siège.

La position des étiquettes est définie préalablement. Le système SYS représenté en figure 1 comporte un équipement S et une pluralité de terminaux d'utilisateurs aptes à communiquer avec l'équipement S via un réseau de télécommunications R.

Les terminaux d'utilisateurs sont par exemple un terminal TA d'un utilisateur UA, un terminal TX d'un utilisateur UX et un terminal TZ d'un utilisateur UZ.

Les terminaux TA, TX et TZ sont des terminaux mobiles, par exemple des téléphones mobiles, des tablettes...

Le réseau R est par exemple un réseau mobile.

A titre d'alternative, le réseau de télécommunication R est le réseau Internet, un réseau Intranet, un réseau sans fil de type Wifi ou Bluetooth...

L'équipement S est un équipement apte à communiquer avec les terminaux via le réseau R. L'équipement S est par exemple un serveur, un ordinateur, un téléphone mobile...

Dans le mode de réalisation décrit, l'équipement S est situé en dehors de l'environnement ENV.

A titre d'alternative, l'équipement S est situé dans l'environnement ENV.

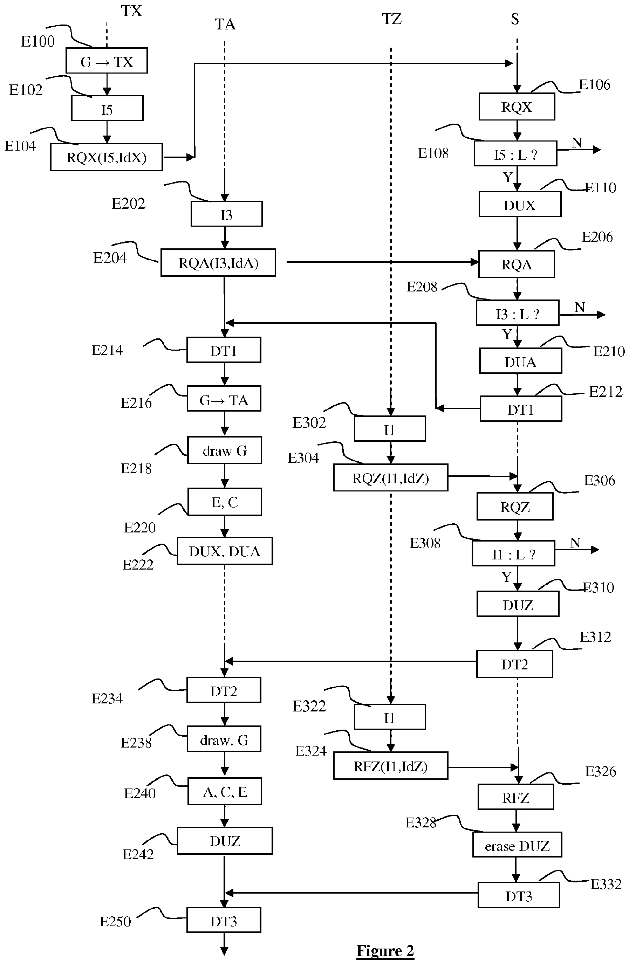

Un mode de réalisation particulier d'un procédé d'obtention et d'un procédé de gestion de présence mis en oeuvre dans le système SYS va maintenant être détaillé en référence à la **figure 2****.**

Lors d'une phase préalable d'initialisation, une liste L contenant les identifiants d'étiquettes I1, I2, I3, I4 et I5 des étiquettes IT1, IT2, IT3, IT4 et IT5 positionnées dans l'environnement ENV est enregistrée.

La liste L d'identifiants d'étiquettes est une liste ordonnée en fonction de la position des étiquettes dans l'environnement ENV.

L'ordre de la liste L représente une information de position au sens de l'invention.

Egalement, lors d'une phase préalable, un graphe G représentant des positions A, B, C, D et E dans l'environnement ENV est défini.

Les positions A à E représentent sur le graphe G, les positions des étiquettes IT1 à IT5 dans l'environnement ENV.

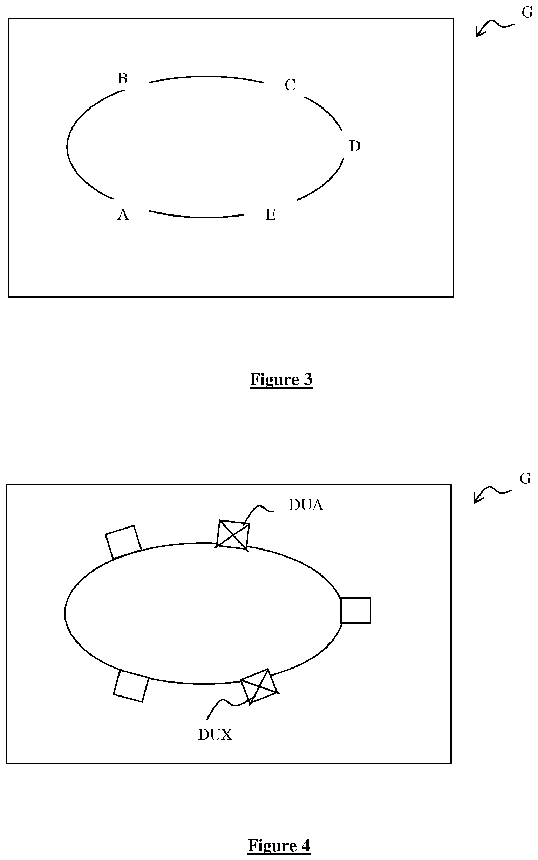

La **figure 3** est un schéma représentant le graphe G.

Lors d'une étape préalable E100, le terminal TX obtient le graphe G et l'enregistre dans une mémoire du terminal TX.

Le graphe G est par exemple transmis au terminal TX par l'équipement S ou téléchargé par le terminal TX, à partir d'un site internet dédié.

Lors d'une étape E102, l'utilisateur UX équipé du terminal TX pénètre dans l'environnement ENV et s'installe sur un siège face à l'étiquette IT5. Il présente son terminal TX au voisinage de l'étiquette IT5 et obtient l'identifiant I5 de l'étiquette IT5.

Lors d'une étape E104, le terminal TX envoie une notification RQX à destination de l'équipement S via le réseau de communication R. La notification RQX contient l'identifiant I5 de l'étiquette IT5 obtenu par le terminal TX et un identifiant IdX du terminal TX de l'utilisateur UX.

L'identifiant de terminal IdX est par exemple le numéro MSISDN ( 'Mobile Station International Subscriber Directory Number ') du terminal TX ou le numéro de téléphone associé au terminal TX.

A titre d'alternative, l'identifiant IdX est un identifiant de l'utilisateur UX, par exemple le nom de l'utilisateur UX, un identifiant attribué à l'utilisateur UX, par exemple au sein d'une entreprise dans laquelle il travaille, un numéro de sécurité sociale...

L'identifiant IdX a été préalablement enregistré dans une mémoire du terminal TX.

La notification RQX est un message permettant au terminal TX de signaler la présence de l'utilisateur UX dans l'environnement ENV.

La notification RQX est par exemple transmise sous la forme d'un SMS (pour « Short message Service » en anglais).

A titre d'alternative, la notification RQX est un message vocal, un mail, un message transmis via une messagerie instantanée...

La notification RQX est reçue par l'équipement S lors d'une étape E106.

Lors d'une étape E108, l'équipement S vérifie que l'identifiant d'étiquette I5 contenu dans la notification RQX figure dans la liste L.

Dans le cas où l'identifiant d'étiquette reçu ne figure pas dans la liste L, le processus s'arrête. Le terminal TX ne reçoit pas de réponse à la notification RQX ou reçoit une message lui indiquant que l'étiquette n'est pas enregistrée. Dans ce cas, l'équipement S se positionne par exemple en attente d'une nouvelle notification provenant d'un terminal.

A titre d'alternative, plusieurs listes d'identifiants d'étiquettes ont été préenregistrées dans une mémoire de l'équipement S et lors de l'étape E108, l'équipement S recherche l'identifiant d'étiquette reçu parmi plusieurs listes.

Dans le cas où l'identifiant d'étiquette reçu figure dans la liste L, l'étape E108 est suivie d'une étape E110 lors de laquelle l'équipement S obtient des données DUX relatives à l'utilisateur UX. De telles données relatives à l'utilisateur UX contiennent des données d'identification DIX de l'utilisateur UX, c'est-à-dire des données permettant à d'autres utilisateurs d'identifier l'utilisateur UX, typiquement un nom, un nom et un prénom, une photo.... Les données DUX peuvent également comprendre des données complémentaires DCX de l'utilisateur telles que par exemple un nom d'entreprise, une adresse, un nom de service...

Les données DUX sont par exemple obtenues par l'équipement S par consultation d'une ou plusieurs bases de données, par exemple un ou plusieurs annuaires, tel que par exemple un annuaire d'entreprise.

A titre d'alternative, tout ou partie de ces données DUX relatives à l'utilisateur UX sont contenues dans la notification RQX reçue par l'équipement S lors de l'étape E106 ou transmises par le terminal TX à l'équipement S en réponse à une requête de l'équipement S.

Les données DUX sont par exemple enregistrées dans la liste L en association avec l'identifiant d'étiquette 15.

Lors d'une étape E202, similaire à l'étape E102, l'utilisateur UA équipé du terminal TA s'installe sur un siège face à l'étiquette IT3. Il présente son terminal mobile TA au voisinage de l'étiquette IT3 et obtient un identifiant 13 du tag IT3.

Lors d'une étape E204, similaire à l'étape E104, le terminal TA envoie une notification RQA à destination de l'équipement S via le réseau de communication R. La notification RQA contient l'identifiant 13 de l'étiquette IT3 obtenu par le terminal TA et un identifiant IdA de l'utilisateur UA ou du terminal TA de l'utilisateur UA.

La notification RQA est reçue par l'équipement S lors d'une étape E206, similaire à l'étape E106.

Lors d'une étape E208, similaire à l'étape E108, l'équipement S vérifie que l'identifiant d'étiquette 13 contenu dans la notification RQA figure dans la liste L.

Dans le cas où l'identifiant d'étiquette reçu ne figure pas dans la liste L, le processus s'arrête.

Dans le cas où l'identifiant d'étiquette reçu figure dans la liste L, l'étape E208 est suivie d'une étape E210, similaire à l'étape E110, lors de laquelle l'équipement S obtient des données DUA relatives à l'utilisateur UA. De telles données relatives à l'utilisateur UA contiennent des données d'identification DIA de l'utilisateur UA.

Les données DUA sont par exemple enregistrées dans la liste L en association avec l'identifiant d'étiquette 13.

Lors d'une étape E212, l'équipement S envoie au terminal TA, des données DT1.

Les données DT1 sont des données relatives à au moins un utilisateur ayant signalé sa présence dans l'environnement ENV. Les données DT1 comprennent des données d'identification d'au moins un utilisateur présent dans l'environnement ENV et au moins une information de position.

Dans le mode de réalisation décrit, les utilisateurs ayant signalé leur présence étant les utilisateurs UX et UA, les données DT1 comprennent les données DUX et DUA.

Dans le mode de réalisation décrit, l'information de position est donnée par l'ordre dans lequel les données relatives aux utilisateurs, typiquement les données d'identification, sont positionnées dans les données DT1. Les positions sur le graphe G sont des positions relatives des utilisateurs, c'est-à-dire des positions déterminées les unes par rapport aux autres.

Dans le mode de réalisation décrit, les données DT1 comprennent également une information sur les positions non occupées de l'environnement ENV.

Les données DT1 transmises sont par exemple V, V, DUA, V, DUX.

Les données V, V, DUA, V, DUX représente une séquence ordonnée au sens de l'invention.

L'ordonnancement de la séquence représente une information de position au sens de l'invention.

V est ici un exemple d'information signalant une position non occupée ou plus précisément, une position pour laquelle l'équipement S n'a pas reçu de notification de signalement de présence.

La séquence ordonnée V, V, DUA, V, DUX indique ici implicitement que les positions correspondant aux étiquettes IT1 et IT2 sont inoccupées, que la position correspondant à l'étiquette IT3 est occupée par un utilisateur dont les données d'identification sont DUA, que la position correspondant à l'étiquette IT4 est inoccupée et que la position correspondant à l'étiquette IT5 est occupée par un utilisateur dont les données d'identification sont DUX.

Les données DT1 sont par exemple transmises sous la forme d'un message de type SMS.

Les données DT1 peuvent également être transmises au terminal TX.

Les données DT1 sont reçues par le terminal TA lors d'une étape E214.

Lors d'une étape E216, le terminal TA obtient le graphe G et l'enregistre dans une mémoire du terminal TA.

Le graphe G est par exemple transmis au terminal TA par l'équipement S.

A titre d'alternative, le graphe G est obtenu par le terminal TA avant la réception des données DT1.

Aucune limitation n'est attachée à l'étape d'obtention du graphe G par le terminal TA.

Lors d'une étape E218, le terminal TA affiche le graphe G préalablement enregistré.

Le graphe G représente des positions d'utilisateurs A, B, C, D, E dans l'environnement ENV.

Lors d'une étape E220, le terminal TA met en évidence sur le graphe G, la position C de l'utilisateur UA et la position E de l'utilisateur UX.

Plus précisément, le terminal TA déduit de la séquence ordonnée DT1 reçue que la première position A n'est pas occupée, que la position B n'est pas occupée, que la position C est occupée par l'utilisateur UA, que la position D n'est pas occupée et que la position E est occupée par l'utilisateur UX.

La **figure 4** représente le graphe G sur lequel les positions des utilisateurs UA et UX sont mises en évidence. Sur ce schéma, une position non occupée est représentée par un carré vide et une position occupée est représentée par un carré contenant une croix.

Dans le mode de réalisation décrit où l'information de position est donnée par l'ordre des données des utilisateurs, les positions sur le graphe sont des positions relatives des utilisateurs, c'est-à-dire des positions déterminées les unes par rapport aux autres.

Dans le mode de réalisation décrit, il est considéré que le premier élément de la séquence DT1 reçue correspond à la position A.

A titre d'alternative, le graphe G étant de forme fermée, le terminal TA attribue la position E à l'utilisateur UA et met en évidence la position E sur le graphe G. Le terminal TA attribue ensuite les autres éléments de la séquence DT1 en fonction de la position de l'utilisateur UA. Ainsi, l'utilisateur UX sera positionné sur le graphe G, deux places à gauche de l'utilisateur UA, c'est-à-dire en position B. Cette représentation permet à l'utilisateur d'identifier rapidement les autres personnes présentes.

Lors d'une étape E222, les données DUX contenues dans la séquence DT1 reçue sont affichées sur le graphe G en liaison avec la position E et les données DUA contenues dans la séquence DT1 reçue sont affichées sur le graphe G en liaison avec la position C.

A titre d'alternative, seule une partie des données DUX et/ou des données DUA reçues sont affichées. La décision d'afficher seulement une partie des données peut être prise par le terminal TA par exemple en fonction de la taille de l'écran sur lequel est affiché le graphe G et/ou en fonction du nombre de positions occupées.

Ultérieurement, lors d'une étape E302, similaire à l'étape E102, un troisième utilisateur UZ équipé d'un terminal TZ s'installe sur un siège face à l'étiquette IT1. Il présente son terminal mobile TZ au voisinage de l'étiquette IT1 et obtient un identifiant I1 de l'étiquette IT1.

Lors d'une étape E304, similaire à l'étape E104, le terminal TZ envoie une notification RQZ à destination de l'équipement S via le réseau de communication R. La notification RQZ contient l'identifiant I1 de l'étiquette IT1 obtenu par le terminal TZ et un identifiant IdZ de l'utilisateur UZ ou du terminal TZ de l'utilisateur UZ.

La notification RQZ est reçue par l'équipement S lors d'une étape E306, similaire à l'étape E106.

Lors d'une étape E308, similaire à l'étape E108, l'équipement S vérifie que l'identifiant d'étiquette I1 contenu dans la notification RQZ figure dans la liste L.

Dans le cas où l'identifiant d'étiquette reçu figure dans la liste L, l'étape E308 est suivie d'une étape E310, similaire à l'étape E110, lors de laquelle l'équipement S enregistre dans la liste L, des données DUZ relatives à l'utilisateur UZ.

Lors d'une étape E312, similaire à l'étape E212, l'équipement S envoie au terminal TA, des données DT2.

Les données DT2 comprennent des données relatives à au moins un utilisateur ayant signalé sa présence dans l'environnement ENV. Les données DT2 comprennent des données d'identification d'au moins un utilisateur présent dans l'environnement ENV et au moins une information de position.

Dans le mode de réalisation décrit, les utilisateurs ayant signalé leur présence étant les utilisateurs TX, TA et TZ, les données DT2 comprennent les données DUX, DUA et DUZ.

Dans le mode de réalisation décrit, les données DT2 comprennent également une information sur les positions non occupées de l'environnement ENV.

Les données DT2 transmises sont par exemple DUZ, V, DUA, V, DUX.

Les données DUZ, V, DUA, V, DUX représente une séquence ordonnée au sens de l'invention.

L'ordonnancement de la séquence représente une information de position au sens de l'invention.

V est ici un exemple d'information signalant une position non occupée ou une position pour laquelle l'équipement S n'a pas reçu de notification de signalement de présence.

La séquence ordonnée DUZ, V, DUA, V, DUX indique ici implicitement que la position correspondant à l'étiquette IT1 est occupée par un utilisateur dont les données d'identification sont DUZ, que la position correspondant à l'étiquette IT2 est inoccupée, que la position correspondant à l'étiquette IT3 est occupée par un utilisateur dont les données d'identification sont DUA, que la position correspondant à l'étiquette IT4 est inoccupée et que la position correspondant à l'étiquette IT5 est occupée par un utilisateur dont les données d'identification sont DUX.

Les données DT2 sont par exemple transmises sous la forme d'un message de type SMS.

Les données DT2 peuvent également être transmises au terminal TX et au terminal TZ.

Les données DT2 sont reçues par le terminal TA lors d'une étape E234.

Lors d'une étape E238, le terminal TA affiche le graphe G.

Lors d'une étape E240, le terminal TA met en évidence sur le graphe G, la position A, la position C et la position E.

Plus précisément, le terminal TA déduit de la séquence ordonnée DT2 reçue que la première position A est occupée par l'utilisateur UZ, que la position B n'est pas occupée, que la position C est occupée par l'utilisateur UA, que la position D n'est pas occupée et que la position E est occupée par l'utilisateur UX.

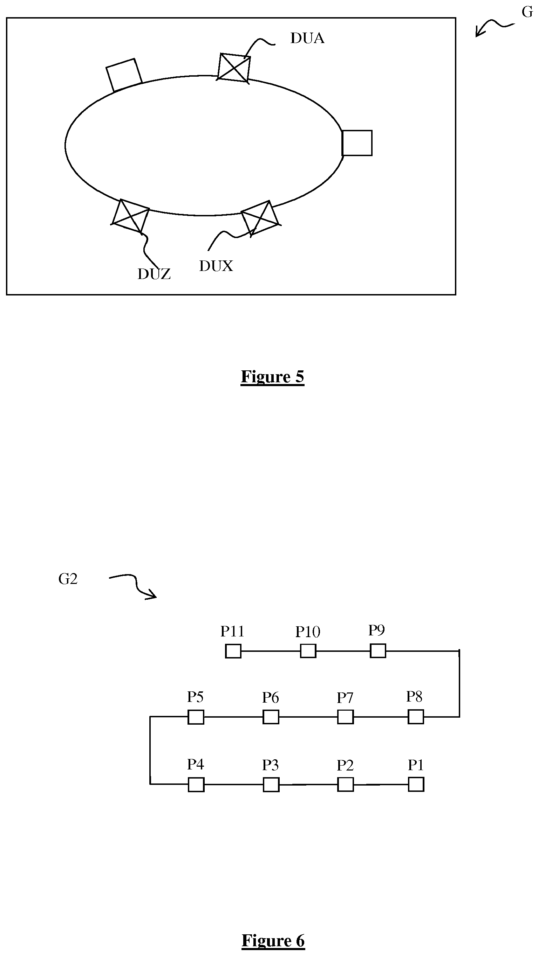

La **figure 5** est un schéma représentant le graphe G sur lequel les positions A, C et E sont mises en évidence.

Sur la figure 5, une position non occupée est représentée par un carré vide et une position occupée est représentée par un carré contenant une croix.

Dans le mode de réalisation décrit, il est considéré que le premier élément de la séquence DT2 reçue correspond à la position A.

Lors d'une étape E242, les données DUZ contenues dans la séquence DT2 sont affichées sur le graphe G en liaison avec la position A, les données DUX contenues dans la séquence DT2 sont affichées sur le graphe G en liaison avec la position E et les données DUA contenues dans la séquence DT2 sont affichées sur le graphe G en liaison avec la position C.

A titre d'alternative, le graphe G avec les positions C et E mises en évidence et les données DUX et DUA affichés reste affiché suite à l'étape E222. Dans cette alternative, il n'est pas nécessaire d'afficher de nouveau le graphe G et l'étape E240 de mise en évidence consiste pour le terminal TA à mettre en évidence sur le graphe G la position A de l'utilisateur UZ. La position E et la position C mises en évidence lors de l'étape E220 restent dans cet état. De même, lors de l'étape E242 d'affichage des données d'identification, seules les données DUZ contenues dans la séquence DT2 sont affichées sur le graphe G en liaison avec la position A, les données DUX et DUA restant affichées. Les étapes E240 et E242 sont alors des étapes de mises à jour du graphe G.

Ultérieurement, lors d'une étape E322, similaire à l'étape E302, l'utilisateur UZ équipé du terminal TZ envisage de quitter l'environnement ENV. Il présente son terminal mobile TZ au voisinage de l'étiquette IT1 et obtient de nouveau l'identifiant I1 de l'étiquette IT1.

L'exécution de l'étape E322, c'est-à-dire l'obtention de l'identifiant d'étiquette par le terminal TZ, déclenche l'exécution d'une étape E324 lors de laquelle le terminal TZ envoie une notification RFZ à destination de l'équipement S via le réseau de communication R. La notification RFZ signale le départ de l'utilisateur UZ de l'environnement ENV. La notification RFZ contient l'identifiant I1 de l'étiquette IT1 et l'identifiant IdZ de l'utilisateur UZ ou du terminal TZ de l'utilisateur UZ.

En variante, la notification RFZ ne contient pas l'identifiant d'étiquette I1.

Egalement en variante, l'envoi de la notification RFZ est déclenché par une action de l'utilisateur vis-à-vis du terminal TZ, par exemple une sélection d'une commande prédéfinie dans un menu.

La notification RFZ est reçue par l'équipement S lors d'une étape E326.

Lors d'une étape E328, l'équipement S supprime de la liste L, les données DUZ relatives à l'utilisateur UZ.

Lors d'une étape E332, similaire à l'étape E212, l'équipement S envoie au terminal TA, des données DT3.

Les données DT3 comprennent des données relatives à au moins un utilisateur ayant signalé sa présence dans l'environnement ENV et n'ayant pas encore signalé son départ de l'environnement ENV. Les données DT3 comprennent des données d'identification d'au moins un utilisateur présent dans l'environnement ENV et au moins une information de position.

Dans le mode de réalisation décrit, les utilisateurs présents étant les utilisateurs TX et TA, les données DT3 comprennent les données DUX et DUA.

Les données DT3 transmises sont par exemple V, V, DUA, V, DUX.

V est ici un exemple d'information signalant une position non occupée.

Les données DT3 peuvent également être transmises au terminal TX.

Les données DT3 sont reçues par le terminal TA lors d'une étape E250.

Suite à la réception des données DT3, le terminal TA met à jour le graphe G de façon similaire à celle décrite précédemment.

Dans le mode de réalisation décrit, les données DT1 reçues par le terminal TA sont V, V, DUA, V, DUX et les données DT2 reçues par ce même terminal sont DUZ, V, DUA, V, DUX.

En alternative, les données DT2 transmises au terminal TA sont DUZ, X, X, X, X. La valeur X indique ici que les données ou la valeur transmises à la position correspondante lors de l'envoi précédent, c'est-à-dire lors de l'envoi des données DT1, sont inchangées. Ceci permet de réduire la quantité de données transmises. Lors de l'étape de mise en évidence, le terminal TA met alors en évidence sur le graphe G, la position A de l'utilisateur UZ, les positions E et C mises en évidence précédemment restant en évidence.

Dans le mode de réalisation décrit, les données DT1 sont une séquence ordonnée.

En variante, une information de position est associée dans les données (DT1, DT2) transmises à un terminal à chaque ensemble de données obtenues pour chaque utilisateur ayant signalé sa présence. Dans ce mode de réalisation, la liste des identifiants d'étiquettes peut ne pas être ordonnée.

Selon un premier exemple, chaque identifiant d'étiquette est enregistré dans la liste L en association avec un identifiant de position qui représente une position dans le graphe G et les données DT1 transmises sont une liste de couples dans laquelle chaque couple contient des données relatives à un utilisateur ayant signalé sa présence et l'identifiant de position associé dans la liste L.

Par exemple, les identifiants de position A, B, C, D, E sont enregistrés respectivement en association avec les identifiants d'étiquette I1, I2, I3, 14 et 15. Les données DT1 comprennent ainsi 5 couples (V, A), (V,B), (DUA, C), (V,D), (DUX,E)).

Selon un deuxième exemple, l'identifiant de position est une valeur de position absolue, par exemple des coordonnées géographiques.

Selon un troisième exemple, l'information de position est un identifiant d'au moins un voisin. En référence au mode de réalisation décrit auparavant, les données DT1 seraient par exemple (DUX, IdA), (DUA, IdZ).

Dans une variante du mode de réalisation décrit, les données DT1 ne sont transmises à un ou plusieurs terminaux que si le nombre d'utilisateurs ayant signalé leur présence est supérieur ou égal à une valeur prédéfinie, par exemple 3.

Dans cette variante, dans le cas où le nombre d'utilisateurs ayant signalé leur présence dans l'environnement ENV est inférieur à la valeur prédéfinie, l'équipement S envoie à un ou plusieurs terminaux, en réponse à la notification de signalement de présence, un accusé de réception de la notification ou l'équipement S n'envoie pas de réponse. Ceci permet de limiter le nombre de messages de données envoyés (DT1, DT2).

Selon un mode de réalisation particulier, les données relatives à un utilisateur, par exemple l'utilisateur UA, contenues dans les données DT1 destinées à cet utilisateur UA, sont l'identifiant de l'utilisateur UA transmis dans la notification RQA. Le terminal TA de l'utilisateur UA connaît les données d'identification de l'utilisateur UA ou ces informations ont été téléchargées lors d'une phase d'initialisation. Le fait que les données DT1 contiennent, pour l'utilisateur UA, seulement l'identifiant de l'utilisateur UA permet de réduire la taille des données DT1 à transférer.

Dans le mode de réalisation décrit, les séquences de données DT1, DT2, DT3 comprennent une information sur les places inoccupées.

A titre d'alternatives, ces séquences ne comprennent pas d'information sur les places inoccupées. Chaque séquence de données transmises permet alors uniquement de positionner chaque utilisateur relativement aux autres sur le graphe G.

Dans un mode de réalisation particulier, une information de validité peut être enregistrée pour la liste L. Cette information de validité est par exemple une plage horaire définie par une date de début et une date de fin.

Les informations relatives aux utilisateurs ayant signalé leur présence seront effacées au début et/ou à la fin de la plage horaire.

Dans le mode de réalisation décrit précédemment en référence aux figures 1 à 5, le graphe G représente des positions d'utilisateurs organisées autour d'une table.

Aucune limitation n'est associée à la disposition des étiquettes.

La **figure 6** représente un deuxième exemple de graphe G2 représentant des positions d'utilisateurs dans une salle de type amphithéâtre.

Le graphe G2 représente des positions P1 à P11.

Les étapes E202, E204, E214, E216, E218, E220, E222, E234, E238, E240, E242 et E250 mises en oeuvre par le terminal TA, représentent des étapes d'un procédé d'obtention d'un graphe.

Les étapes E106, E108, E110, E206, E208, E210, E212, E306, E308, E310, E312, E236, E328 et E332 mises en oeuvre par l'équipement S, représentent des étapes d'un procédé de gestion de présence.

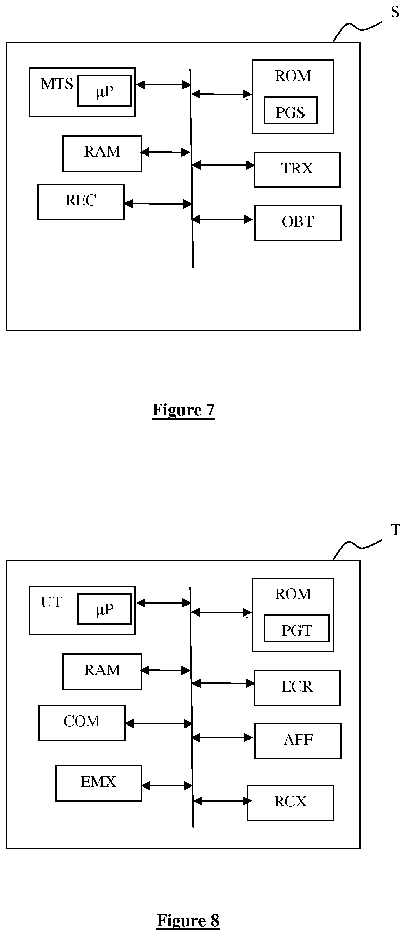

Selon un mode de réalisation choisi et représenté à la **figure 7**, un équipement mettant en oeuvre un procédé de gestion de présence selon l'invention est par exemple un serveur S.

A titre d'alternative, l'équipement mettant en oeuvre le procédé de gestion de présence est un ordinateur de type PC (« Personal Computer ») ou un terminal mobile.

Le serveur S comporte de façon connue, notamment une unité de traitement MTS équipée d'un microprocesseur, une mémoire morte de type ROM, une mémoire vive de type RAM. Le serveur S peut comporter de manière classique et non exhaustive les éléments suivants: un clavier, un écran, un microphone, un haut-parleur, une interface de communication, un moyen de stockage...

La mémoire morte de type ROM comporte des registres mémorisant un programme d'ordinateur PGS comportant des instructions de programme adaptées à mettre en oeuvre un procédé de gestion de présence selon un mode de réalisation de l'invention décrit précédemment en référence à la figure 2.

Le serveur S comporte également un module de réception REC, un module de transmission TRX et un module d'obtention OBT.

Le module de réception REC est configuré pour recevoir au moins une notification émise par un terminal via un réseau de télécommunications et signalant la présence d'un utilisateur dans un environnement prédéfini, cette notification contenant d'une part un identifiant de support d'une liste d'identifiants de support prédéfinie pour ledit environnement et d'autre part un identifiant de l'utilisateur ou d'un terminal de l'utilisateur, cet identifiant de support étant émis par un support de données apte à émettre des données via une technologie de communication sans fil en champ proche, la liste d'identifiants de support contenant au moins une information de position prédéfinie.

Le module d'obtention OBT est configuré pour obtenir, pour au moins une notification de présence reçue, des données d'identification d'un utilisateur d'un terminal visé dans une dite notification.

Le module de transmission TRX est configuré pour transmettre à au moins un terminal, via le réseau de télécommunication, des données relatives à au moins un utilisateur présent dans ledit environnement, ces données comprenant des données d'identification de l'utilisateur et au moins une information de position.

Selon un mode de réalisation choisi et représenté à la **figure 8**, un terminal mettant en oeuvre un procédé d'obtention de graphe selon l'invention est par exemple un terminal mobile T.

Le terminal T comporte de façon connue, notamment une unité de traitement UT équipée d'un microprocesseur, une mémoire morte de type ROM et une mémoire vive de type RAM.

La mémoire morte de type ROM comporte des registres mémorisant un programme d'ordinateur PGT comportant des instructions de programme adaptées à mettre en oeuvre un procédé d'obtention selon un mode de réalisation de l'invention décrit précédemment en référence à la figure 2.

Le terminal T peut comporter de manière classique et non exhaustive les éléments suivants: un microphone, un haut-parleur, un lecteur de disque, un clavier, un écran de visualisation, un module d'affichage pour l'affichage sur l'écran de visualisation, un moyen de stockage...

Le terminal T comporte également un écran ECR, un module de communication COM, un module de réception RCX, un module d'envoi EMX et un module d'affichage AFF.

Le module de communication COM est apte à communiquer avec un support de données en utilisant une technologie de communication sans fil en champ proche. Le module de communication COM est agencé pour obtenir un identifiant de support lorsqu'il se trouve au voisinage d'un support de données émettant des données via une technologie de communication sans fil en champ proche.

Le module d'envoi EMX est configuré pour envoyer à un équipement, via un réseau de télécommunications, une notification signalant la présence d'un utilisateur du terminal dans un environnement prédéfini, ladite notification contenant l'identifiant de support obtenu et un identifiant de l'utilisateur ou du terminal. Le module d'envoi EMX peut également être configuré pour envoyer à destination dudit équipement une notification signalant le départ de l'utilisateur de l'environnement ENV.

Le module de réception RCX est configuré pour recevoir, suite à l'envoi de la notification, des données émises par l'équipement, ces données émises étant relatives à au moins un utilisateur présent dans ledit environnement et comprenant des données d'identification d'au moins un utilisateur présent et au moins une information de position.

Le module d'affichage AFF est configuré pour afficher sur l'écran ECR, un graphe représentant des positions d'utilisateurs dans l'environnement prédéfini, pour mettre en évidence sur ce graphe au moins une position attribuée à un utilisateur en fonction d'au moins une information de position et pour afficher sur ce graphe, en liaison avec au moins une position mise en évidence, tout ou partie des données reçues pour cet utilisateur.

## Revendications

1. Procédé d'obtention d'un graphe (G) par un terminal de télécommunication (TA) d'un utilisateur (UA), ledit terminal étant apte à communiquer avec un équipement (S) via un réseau de télécommunications (R),
**caractérisé en ce que** le procédé comporte les étapes suivantes, mises en oeuvre par ledit terminal :
- obtention (E202) d'un identifiant de support (13) émis par un support de données (IT3) apte à émettre des données via une technologie de communication sans fil en champ proche, ledit support étant situé dans un environnement prédéfini (ENV);
- envoi (E204) audit équipement d'une notification (RQA) signalant la présence dudit utilisateur dans ledit environnement, ladite notification contenant ledit identifiant de support obtenu et un identifiant (IdA) de l'utilisateur ou du terminal ;
- réception (E214), suite à l'envoi de ladite notification, en provenance dudit équipement, des données (DT1) relatives à au moins un utilisateur présent dans ledit environnement, lesdites données comprenant des données d'identification d'au moins un utilisateur présent et au moins une information de position ;
- affichage (E216) d'un graphe (G) représentant une pluralité de positions d'utilisateurs dans ledit environnement ;
- mise en évidence (E222) sur ledit graphe d'au moins une position (E,C) de la pluralité de positions, ladite au moins une position étant attribuée à au moins un utilisateur de la pluralité en fonction de ladite au moins une information de position ; et
- affichage (E222) sur ledit graphe, en liaison avec au moins une position mise en évidence, de tout ou partie des données (DUX, DUA) reçues pour au moins un utilisateur.

2. Procédé d'obtention selon la revendication 1 dans lequel ladite au moins une information de position est une information de position relative.

3. Procédé d'obtention selon la revendication 1 dans lequel les données relatives à au moins un utilisateur présent dans ledit environnement comprennent une séquence ordonnée de données d'identification d'utilisateurs.

4. Procédé d'obtention selon la revendication 3 dans lequel ladite séquence contient des données signalant au moins une position non occupée.

5. Procédé d'obtention selon l'une des revendications précédentes dans lequel ladite au moins une information de position comprend au moins une référence à une position prédéterminée dudit graphe.

6. Procédé d'obtention selon la revendication 1 dans lequel les données relatives à au moins un utilisateur présent dans ledit environnement comprennent une liste de couples, un couple de la liste contenant des données d'identification d'un dit utilisateur présent et un identifiant de position

7. Procédé d'obtention selon l'une des revendications précédentes comportant une étape d'envoi audit équipement d'une notification signalant le départ dudit utilisateur dudit environnement, ladite notification contenant un identifiant dudit utilisateur ou dudit terminal.

8. Procédé d'obtention selon l'une des revendications précédentes dans lequel les étapes de réception, de mise en évidence et d'affichage sont réitérées.

9. Procédé de gestion de présence comportant les étapes suivantes mises en oeuvre par un équipement (S) apte à communiquer avec une pluralité de terminaux (TX, TA, TZ) via un réseau de communication (R) :
- réception (E106, E206), en provenance d'au moins un terminal (TX, TA) de la pluralité, d'au moins une notification (RQX, RQA) signalant la présence d'un utilisateur dans un environnement prédéfini (ENV), une dite notification contenant un identifiant de support d'une liste (L) d'identifiants de support prédéfinie pour ledit environnement et un identifiant dudit utilisateur ou d'un terminal dudit utilisateur, ledit identifiant de support étant émis par un support de données apte à émettre des données via une technologie de communication sans fil en champ proche, ladite liste d'identifiants de support contenant au moins une information de position prédéfinie;
- obtention (E110, E210), pour au moins une notification de présence reçue, de données d'identification dudit utilisateur dudit terminal ;
- transmission (E212) audit au moins un terminal, de données (DUX, DUA) relatives à au moins un utilisateur présent dans ledit environnement, lesdites données comprenant lesdites données d'identification et au moins une information de position.

10. Terminal (TA) d'un utilisateur (UA), ledit terminal étant apte à communiquer avec un équipement (S) via un réseau de télécommunications (R),
**caractérisé en ce qu'**il comporte :
- un module de communication (COM) en champ proche agencé pour obtenir un identifiant de support émis par un support de données apte à émettre des données via une technologie de communication sans fil en champ proche, ledit support étant situé dans un environnement prédéfini ;
- un module d'envoi (EMX) audit équipement d'une notification signalant la présence dudit utilisateur dans ledit environnement, ladite notification contenant ledit identifiant de support obtenu et un identifiant de l'utilisateur ou du terminal ;
- un module de réception RCX), suite à l'envoi de ladite notification, en provenance dudit équipement, de données relatives à au moins un utilisateur présent dans ledit environnement, lesdites données comprenant des données d'identification d'au moins un utilisateur présent et au moins une information de position ;
- un module d'affichage (AFF) configuré pour :
- afficher un graphe représentant une pluralité de positions d'utilisateurs dans ledit environnement prédéfini ;
- mettre en évidence sur ledit graphe au moins une position de la pluralité de positions, ladite au moins une position étant attribuée à au moins un utilisateur de la pluralité en fonction de ladite au moins une information de position ;
- afficher sur ledit graphe, en liaison avec au moins une position mise en évidence, tout ou partie des données reçues pour au moins un utilisateur.

11. Equipement apte à communiquer avec une pluralité de terminaux via un réseau de communication comprenant :
- un module de réception (REC) configuré pour recevoir, en provenance d'au moins un terminal de la pluralité, d'au moins une notification signalant la présence d'un utilisateur dans un environnement prédéfini, une dite notification contenant un identifiant de support d'une liste d'identifiants de support prédéfinie pour ledit environnement et un identifiant dudit utilisateur ou d'un terminal dudit utilisateur, ledit identifiant de support étant émis par un support de données apte à émettre des données via une technologie de communication sans fil en champ proche, ladite liste d'identifiants de support contenant au moins une information de position prédéfini ;
- un module d'obtention (OBT), pour au moins une notification de présence reçue, de données d'identification dudit utilisateur dudit terminal ;
- un module de transmission (TRX) audit au moins un terminal, des données relatives à au moins un utilisateur présent dans ledit environnement, lesdites données comprenant lesdites données d'identification et au moins une information de position.

12. Système (SYS) comprenant un équipement (S) selon la revendication 11 et une pluralité de terminaux (TA, TX, TZ) selon la revendication 10.

13. Programme d'ordinateur comprenant des instructions pour la mise en oeuvre d'un procédé d'obtention selon l'une des revendications 1 à 8 ou d'un procédé de gestion selon la revendication 9 , lorsque ce programme est exécuté par un processeur.

14. Support d'informations lisible par un processeur de données, et comportant des instructions pour la mise en oeuvre d'un procédé d'obtention selon l'une des revendications 1 à 8 ou d'un procédé de gestion selon la revendication 9.
